# EUROPÄISCHE PATENTANMELDUNG

(11) **EP 2 221 198 A1**
(43) Veröffentlichungstag der Anmeldung: **25.08.2010**
(21) Anmeldenummer: 10152905.5
(22) Anmeldetag: 08.02.2010
(51) Int. Cl.: B60H 1/00

(54) **Verfahren zur Bestimmung des Temperatur-Startwerts einer modellbasierten Innenraumtemperaturregelung eines Fahrzeuges**

(30) Priorität: 12.02.2009 DE 102009008606
(71) Anmelder: Behr-Hella Thermocontrol GmbH, 70190 Stuttgart (DE)
(72) Erfinder: Gehsat, Carsten, 59557 Lippstadt (DE); Trapp, Ralph, 33102 Paderborn (DE)
(74) Vertreter: von Kreisler Selting Werner

(57) **Zusammenfassung**

Bei dem Verfahren zur Bestimmung des Temperatur-Startwerts einer modellbasierten Innenraumtemperaturregelung eines Fahrzeuges, das ein wahlweise im Frischluft- und Umluftbetrieb arbeitendes und der Zufuhr von Luft über ein oder mehrere Auslässe in den Innenraum des Fahrzeuges dienendes Luftzufuhrsystem mit mindestens einem Temperatursensor zur messtechnischen Ermittlung der Temperatur der das Luftzufuhrsystem durchströmenden Luft aufweist, wird die Temperatur der Luft im Innenraum des Fahrzeuges ermittelt wird, indem das Luftzufuhrsystem im Umluftbetrieb arbeitet und der Messwert des mindestens einen Temperatursensors des Luftzufuhrsystems als Temperatur-Startwert oder als Grundlage für die Ermittlung des Temperatur-Startwerts der modellbasierten Innenraumtemperaturregelung genutzt.

## Beschreibung

Die Erfindung betrifft ein Verfahren zur Bestimmung des Temperatur-Startwerts für das thermodynamische Modell einer modellbasierten Innenraumtemperaturregelung eines Fahrzeuges ohne Verwendung einer Temperaturmesssensorik innerhalb der Fahrzeugkabine.

Bei der vollautomatisierten Klimatisierung von Kraftfahrzeugkabinen wird die Kabinentemperatur zur Regelung verwendet. Dabei wird die Einstellung der Solltemperatur am Klimasteuergerät mit der gemessenen Temperatur im Kraftfahrzeuginnenraum verglichen. Die Temperaturdifferenz zwischen Temperatursollwert und gemessener Kabinentemperatur wird mit Hilfe eines Reglers ausgeglichen. Zur Messung der Temperatur im Kraftfahrzeuginnenraum existieren verschiedene Verfahren. Neben der Temperaturmessung mit zwangsbelüfteten Sensoren ist heute auch eine Messung mit unbelüftete Sensoren üblich. Durch die Temperaturmesssensorik entstehen zusätzliche Kosten; außerdem kann die optimale Einbaulage auf Grund bestimmter Designvorhaben zumeist nicht erfüllt werden.

In DE 10 2005 040 377 A1 wird vorgeschlagen, mit Hilfe eines thermodynamischen Kabinenmodells virtuelle Temperaturpunkte innerhalb der Fahrzeugkabine zu berechnen. Ein ähnliches Verfahren wird in DE 43 97 190 C2 dargestellt. Hier erfolgt ebenfalls eine Berechnung der Kabinentemperatur mit Hilfe eines Modells. Um die Initialisierungs- bzw. die Startwerttemperatur für das mathematische Berechnungsmodell zu bestimmen, wird im Stand der Technik jedoch wie bei der konventionellen Innenraumtemperaturregelung ohne Kabinenmodell auf einen Temperatursensor innerhalb der Kabine zurückgegriffen.

Aufgabe der Erfindung ist es, ein Verfahren zur Bestimmung der Initialisierungstemperatur für ein thermodynamisches Kabinenmodell anzugeben, ohne dass bei der Ermittlung der Initialisierungstemperatur auf Temperaturmesssensorik innerhalb der Fahrzeugkabine zurückgegriffen werden muss.

Zur Lösung dieser Aufgabe wird mit der Erfindung ein Verfahren zur Bestimmung des Temperatur-Startwerts einer modellbasierten, d.h. auf einem mathematischen Temperaturmodell der Fahrzeugkabine beruhenden Innenraumtemperaturregelung eines Fahrzeuges, das ein wahlweise im Frischluft-und Umluftbetrieb arbeitendes und der Zufuhr von Luft über ein oder mehrere Auslässe in den Innenraum des Fahrzeuges dienendes Luftzufuhrsystem mit mindestens einem Temperatursensor zur messtechnischen Ermittlung der Temperatur der das Luftzufuhrsystem durchströmenden Luft aufweist, vorgeschlagen, wobei bei dem Verfahren die Temperatur der Luft im Innenraum des Fahrzeuges ermittelt wird, indem das Luftzufuhrsystem im Umluftbetrieb arbeitet und der Messwert des mindestens einen Temperatursensors des Luftzufuhrsystems als Temperatur-Startwert oder als Grundlage für die Ermittlung des Temperatur-Startwerts der modellbasierten Innenraumtemperaturregelung genutzt wird.

Bei der erfindungsgemäßen Startwert-Temperaturbestimmung für die modellbasierte Innenraumtemperaturregelung wird auf Temperatursensorik im Kraftfahrzeuginnenraum generell verzichtet; vielmehr wird erfindungsgemäß die Starttemperatur zum Initialisieren des mathematischen thermodynamischen Kabinenmodells, das das thermodynamische Verhalten der Fahrzeugkabine bzw. des Innenraums mit Umschließungsflächen/-elementen beschreibt, mit Hilfe von im Luftzufuhrsystem des Fahrzeuges bereits vorhandener Sensorik ermittelt. Als Temperatursensor kann z.B. der eingangsseitig eines Verdampfers (Kühlaggregats) angeordnete Temperatursensor oder eventuell vorhandene Ausblastemperatursensorik genutzt werden. Hierzu wird zur Bestimmung einer Starttemperatur (aktuelle Kabinenlufttemperatur) beim Anlassen des Fahrzeuges kurzzeitig der Umluftbetrieb eingeschaltet. Die Kabinenluft wird so über den Verdampfersensor und die eventuell vorhandene Ausblassensorik geführt. Aus der Temperaturänderung bzw. der Temperatur an den genannten Sensoren kann auf die aktuelle Kabinentemperatur und somit auf die zu verwendende Starttemperatur geschlossen werden.

Dieses Verfahren kann auch nach Tür- und Fensteröffnungen verwendet werden, um das Kabinenmodell neu zu initialisieren. Die benötigten Botschaften über eventuelle Tür- und Fensteröffnungen können über fahrzeuginterne Bus-Systeme (z.B. CAN-BUS) bereitgestellt werden.

## Patentansprüche

1. Verfahren zur Bestimmung des Temperatur-Startwerts einer modellbasierten Innenraumtemperaturregelung eines Fahrzeuges, das ein wahlweise im Frischluft- und Umluftbetrieb arbeitendes und der Zufuhr von Luft über ein oder mehrere Auslässe in den Innenraum des Fahrzeuges dienendes Luftzufuhrsystem mit mindestens einem Temperatursensor zur messtechnischen Ermittlung der Temperatur der das Luftzufuhrsystem durchströmenden Luft aufweist, wobei bei dem Verfahren
- die Temperatur der Luft im Innenraum des Fahrzeuges ermittelt wird, indem das Luftzufuhrsystem im Umluftbetrieb arbeitet und der Messwert des mindestens einen Temperatursensors des Luftzufuhrsystems als Temperatur-Startwert oder als Grundlage für die Ermittlung des Temperatur-Startwerts der modellbasierten Innenraumtemperaturregelung genutzt wird.

2. Verfahren nach Anspruch 1, **dadurch gekennzeichnet, dass** als Temperatursensor des Luftzufuhrsystems ein Ausblastemperatursensor und/oder ein Verdampfer-Temperatursensor verwendet wird.

3. Verfahren nach Anspruch 1 oder 2, **dadurch gekennzeichnet, dass** die Ermittlung des Temperatur-Startwerts durch Arbeiten des Luftzufuhrsystems im Umluftbetrieb nach einem Starten des Fahrzeugmotors und/oder nach dem Öffnen und Wiederschließen eines Fensters, einer Tür oder eine Heckklappe durchgeführt wird.
